Europäisches Patentamt

European Patent Office

Office européen des brevets

(11) Veröffentlichungsnummer: **0 431 391 A2**

## (12) EUROPÄISCHE PATENTANMELDUNG

(21) Anmeldenummer: 90122153.1

(22) Anmeldetag: 20.11.90

(51) Int. Cl.5: **C09J 153/00**

(30) Priorität: 07.12.89 DE 3940490

(43) Veröffentlichungstag der Anmeldung:
12.06.91 Patentblatt 91/24

(84) Benannte Vertragsstaaten:
DE ES FR GB IT

(71) Anmelder: Beiersdorf Aktiengesellschaft
Unnastrasse 48
W-2000 Hamburg 20(DE)

(72) Erfinder: Lamm, Dirk, Dr.
Osterkamp 1
W-2000 Hamburg 70(DE)
Erfinder: Lühmann, Bernd, Dr.
Simrockstrasse 183
W-2000 Hamburg 55(DE)
Erfinder: Kehler, Harald, Dr.
Bussestrasse 1
W-2000 Hamburg 60(DE)
Erfinder: Kramer, Jürgen, Dr.
Stieglitzweg 30
W-2107 Rosengarten(DE)

(54) **Druckempfindlicher Schmelzhaftkleber.**

(57) Druckempfindlicher Schmelzhaftkleber enthaltend eine Mischung von thermoplastischen Elastomeren mit polaren, hydrophilen Harzen, gegebenenfalls neben weiteren üblichen Bestandteilen, wie Klebharzen, Weichmachern, Alterungsschutzmitteln und/oder Füllstoffen.

EP 0 431 391 A2

## DRUCKEMPFINDLICHER SCHMELZHAFTKLEBER

Die Erfindung betrifft einen druckempflindlichen Schmelzhaftkleber (lösungsmittelfrei), seine Herstellung und seine Verwendung, insbesondere zum wiederholten Verschluß von Tiefkühlbeuteln im Temperaturbereich bis -30° C.

Der Auftrag lösungsmittelfreier Schmelzklebemassen wird seit langem von den Klebestreifenherstellern praktiziert. Durch die Abwesenheit eines Lösungsmittels ergeben sich die Ausschaltung der Brandgefahr, eine wesentliche Kostensenkung und die Ausschaltung des Problems der Luftverunreinigung.

Besondere Bedeutung auf dem Gebiet der HMPSA-Massen haben Systeme welche Blockcopolymere enthalten mit Blöcken bestehend aus Polystyrol (S) und solchen bestehend aus Poly-1, 3-Dienen insbesondere Polyisopren (I), Polybutadien (B) oder deren Hydrierungsprodukten Poly(Ethylen/Propylen) (EP) bzw. Poly(Ethylen/Butylen) (EB). Zur Anwendung kommen unter anderem 2-Block-, 3-Block- und Multiblockcopolymere. Verwendung finden sowohl die reinen Blockcopolymere als auch Abmischungen verschiedener Typen. Die besondere Eignung der angegebenen Substanzen zur Herstellung thermoplastisch verarbeitbarer PSA-Massen liegt in der Eigenschaft der unterschiedlichen Blöcke zur Domänenbildung (Phasenseparation). Die bei höheren Temperaturen erweichenden Polystyroldomänen wirken bei Temperaturen unterhalb ihres Erweichungspunktes als physikalische Vernetzungspunkte für die als Weichblock Verwendung findenden Elastomere Polyisopren, Polybutadien oder deren Hydrierungsprodukte. Neben Polystyrol können auch Homo- oder Copolymere weiterer Vinylaromaten Verwendung finden.

Bei den üblichen HMPSA-Massen steigt bei tiefen Temperaturen (ca. -30° C) der Elastizitätsmodul so stark an, daß die Haftklebeeigenschaften stark eingeschränkt sind. Die Klebmassen verhalten sich spröde und hart und es kommt bei mechanischer Beanspruchung oder Verklebung zum Adhäsionsbruch, oder aber die Selbstklebemassen kleben so stark, daß sie nur unter Kohäsionsbruch oder nur unter Zerstörung des Trägers entfernt werden können. In jedem Fall ist eine gute reversible Verklebbarkeit nicht gewährleistet. DE-OS 3700248, EP-OS 277346, DE-OS 3729141, DE-OS 3113706 oder EP-OS 295330.

Auch die EP-PS 134130 und die EP-OS 289863 beschreiben derartige Klebemassen, die jedoch unter Tiefkühlbedingungen (- 30 ° bis - 10° C) nicht reversibel zu öffnen und wieder zu verschließen sind.

Aufgabe der Erfindung war es, insbesondere einen Schmelzhaftkleber zu schaffen, der auch für Tiefkühlanwendungen und dgl. zum wiederholten Verschluß insbesondere flexibler Haftgründe geeignet ist.

Gelöst wird diese Aufgabe durch den in den Ansprüchen näher gekennzeichneten Schmelzhaftkleber.

Die erfindungsgemäßen Haftklebemassen behalten auch bei tiefen Temperaturen (ca. - 30° C) ein gutes elastisches Verhalten bei, die Masse wird nicht spröde und es ist ein reversibles Verkleben möglich, ohne daß Kohäsionsversagen auftritt.

Überraschenderweise zeigte sich, daß der Zusatz von polaren, hydrophilen Substanzen, die in Lösung mit den restlichen unpolaren Bestandteilen nicht mischbar waren, in der Schmelze gemischt werden konnten und die daraus resultierenden HMPSA-Masse die Eigenschaft besitzt, sowohl bei tiefen Temperaturen (ca. - 30° C) zu verkleben als auch nach dem Lösen der Verklebung und anschließendem erneuten Verklebungsversuch trotz Kondenswasserbildung wieder verklebbar zu sein. D. h. durch den gewählten Aufbau der Klebemasse ist es möglich, trotz eines Wasser- oder Eisfilms auf den Fügeflächen eine reversible Verklebung durchzuführen, was nach dem bisherigen Stand der Technik nicht möglich war.

Die verwendeten druckempfindlichen Heißschmelzklebemassen enthalten insbesondere Blockcopolymere mit Blöcken bestehend aus Styrolhomopolymer und Blöcke bestehend aus Copolymeren aus Ethylen und 1-Buten (Poly(Ethylen/Butylen; EB) bzw. Blöcke bestehend aus Copolymeren aus Ethylen und 1-Propen (Poly(Ethylen/Propylen; EP). Insbesondere finden Polystyrol-Poly(Ethylen/Butylen)-Polystyrol (S-EB-S) 3-Blockcopolymere sowie Mischungen von S-EB 2- und S-EB-S 3-Blockcopolymeren Verwendung, welche durch selektive Hydrierung aus 2-Blockcopolymeren des Typs Polystyrol-Polybutadien (S-B) und 3-Blockcopolymere des Typs Polystyrol-Polybutadien-Polystyrol (S-B-S) erhalten werden können. Desgleichen finden Polystyrol-Poly(Ethylen/Propylen)-Polystyrol (S-EP-S) 3 Blockcopoylmere sowie Mischungen von SEP 2- und SEPS 3 Blockcopoylmeren Verwendung, welche durch selektive Hydrierung aus 2-Blockcopolymeren des Typs Polystyrol-Polyisopren (S-I und 3-Blockcopolymere des Typs Polystyrol-Polyisopren-Polystyrol (SIS) erhalten werden können. Erfindungsgemäß einsetzbar sind weiterhin (S-EB)n und (S-EP)n Multiblockcopolymere sowie funtionalisierte Blockcopolymere, wie beispielsweise mit Maleinsäureanhydrid modifizierte Typen.

Des weiteren können Blockcopolymere, enthaltend Blöcke bestehend aus Polystyrol sowie Elastomerblöcke, bestehend aus Homo- und Copolymerisaten von 1,3-Dienen, vorzugsweise 1,3-Butadien und Isopren, eingesetzt werden. Diese als Abmischkomponenten verwendeten Blockcopolymere können im Elastomerblock partiell oder vollständig hydriert sein. Erfindungsgemäß sind ebenfalls Blockcopolymere, welche anstelle von Styrolhomopolymerblöcken solche bestehend aus weiteren Vinylaromaten wie beispielsweise a-Methylstyrol oder Copolymere aus Styrol und weiteren Vinylaromaten enthalten.

Als Klebrigmacher (Klebharz) können die bei diesen Selbstklebemassesystemen üblichen Harzzusätze, wie synthetische, natürlich vorkommende oder durch Modifikation von natürlich vorkommenden Harzen gewonnene Produkte eingesetzt werden. Weitere Abmischkomponenten umfassen u. a. weichmachende Bestandteile wie Öle, niedermolekulare Polyisobutylen oder Copolymere enthaltend 1-Buten und Isobutylen als Comonomere, sowie Wachse und Füllstoffe. Beispiele für letztere sind Ca-Carbonat oder Mikrotalkum. Geeignete Hilfsstoffe sind insbesondere Alterungsschutzmittel wie primäre und sekundäre Antioxidantien sowie UV-Stabilisatoren.

Als polare und/oder hydrophile Komponente können bevorzugt wasserlösliche oder besonders bevorzugt wasserquellbare Substanzen wie Polyvinylalkylether, Polyvinylpyrrolidone, Polyethyloxazoline, Polyvinylalkohole und Polyacrylsäurecopolymere insbesondere Ester der Polyacrylsäure verwendet werden, insbesondere solche mit niedrigem mittlerem Molekulargewicht, bevorzugt unter 20.000 Dalton, die bevorzugt bis zu 15 Gew.-% Acrylsäure enthalten. Ebenfalls eignen sich quervernetzte Copolymere der Polyacrylsäure.

Die verwendeten Zumischkomponenten können so gewählt sein, daß sie bevorzugt mit der Elastomerphase assoziieren, bevorzugt mit der Polyvinylaromatenphase assoziieren oder auch auf beide Phasenbereiche verteilt vorliegen.

Die Beschichtung der HMPSA-Massen auf die verwendeten Folienträger erfolgt bevorzugt bei Temperaturen oberhalb + 120° C, typischerweise jedoch oberhalb + 150° C. Mögliche Beschichtungsverfahren sind u. a. die Extrusionsbeschichtung aus einer Breitschlitzdüse und Rollenauftragsverfahren.

Die vorzugsweise verwendeten Mengenverhältnisse in den HMPSA-Massen sind dabei wie folgt:

| | |
|---|---|
| 5 - 55 Gew.-% | Poly(Ethylen/Butylen)- haltige Blockcopolymere, bevorzugt 15 - 40 Gew.-% |
| 0 - 50 Gew.-% | weitere Blockcopolymere bevorzugt 70 - 30 Gew.-% |
| | 25 - 60 Gew.-% Gesamt-Blockcopolymer werden bevorzugt |
| 0 - 75 Gew.-% | Klebharze bevorzugt 10 - 50 Gew.-% |
| 0 - 70 Gew.-% | weichmachende Bestandteile, Wachse bevorzugt 10 - 55 Gew.-% |
| 0 - 30 Gew.-% | Füllstoffe bevorzugt 5 - 20 Gew.-% |
| 0 - 5 Gew.-% | Alterungsschutzmittel bevorzugt 0,2 - 1,5 Gew.-% |
| 2 - 20 Gew.-% | polare, hydrophile Substanzen bevorzugt 4 - 10 Gew.-% |

Nachfolgend wird die Erfindung anhand von Beispielen erläutert, ohne diese damit einschränken zu wollen.

## Beispiel 1

Eine HMPSA-Masse bestehend aus:

| | |
|---|---|
| 34,4 Gew.-% | S-EB-S Blockcopolymer |
| 20,6 Gew.-% | eines hydrierten KW-Harzes mit Erweichungspunkt von ca. + 94° C |
| 39,7 Gew.-% | eines hydrierten Weichharzes |
| 5,0 Gew.-% | einer polaren/hydrophilen Komponente (Polyethyloxazolin) |
| 0,3 Gew.-% | eines phenolischen Antioxidanzes |

wird:

- bei einer Temperatur von + 170° C
- bei einer Bahngeschwindigkeit von 150 m/min
- in einer Auftragsstärke von 20 g/m²

auf einer Folie beschichtet. Diese Klebmasse ist für den reversiblen Verschluß von Tiefkühlbeuteln hervorragend geeignet.

## Beispiel 2

| | |
|---|---|
| 31,0 Gew.-% | SIS Blockcopolymer |
| 34,0 Gew.-% | eines hydrierten Kolophoniumharzes mit dem Erweichungspunkt von ca. + 103° C |
| 3,0 Gew.-% | eines modifizierten Naturharzes mit dem Erweichungspunkt von ca. + 75° C |
| 23,4 Gew.-% | eines naphthenischen/aliphatischen Weißöls |
| 8,0 Gew.-% | einer polaren/hydrophilen Komponente (Polyvinylalkylether) |
| 0,3 Gew.-% | eines phenolischen Antioxidanzes |
| 0,3 Gew.-% | eines UV-Stabilisators |

Die Beschichtung erfolgte analog Beispiel 1. Reversible Verschlüsse für Tiefkühlbeutel lassen sich damit hervorragend herstellen.

**Beispiel 3**

29,9 Gew. -%      S-EB-S Blockcopolymer
10,7 Gew. -%      eines hydrierten KW-Harzes mit Erweichungspunkt von ca. + 85 ° C
51,8 Gew. -       % eines hydrierten Weichharzes
7,3 Gew. -%       einer polaren/hydrophilen Komponente (Polyacrylsäureester)
0,3 Gew. -%       eines phenolischen Antioxidanzes

Die Beschichtung und Verwendung erfolgte analog Beispiel 1.

Charakterisierung der einzelnen Substanzen
**Zu Beispiel 1:**

```
a)   S-EB-S Blockcopolymer
        - Brookfield-Lösungs-
        viskosität (20 %ig in Toluol): 1000 - 2000 cPs
        - Styrolgehalt              : 14 %
        - Härte Shore A             : 65


b)   hydriertes KW-Harz
        - Erweichungspunkt (R&B)    : 94 ° C
        - Spezifische Dichte
        (21 ° C)                    : 0,99
        - Glastemperatur (Tg)       : 33 ° C
```

c)   hydriertes Weichharz
          - Fließpunkt (ASTM D97)        : 4,27 ° C
          - Molekulargewicht            : 1290
          - Viskosität (99 ° C)         : 627 - 675 cSt


d)   Polyethyloxazolin
          - mittleres Molekular-
            gewicht (Mw)                : 50.000
          - Dichte (20 ° C)            : 1,14 g/ccm
          - Glastemperatur (Tg)        : 69 - 71 ° C


e)   phenolisches Antioxidant
          - Molekulargewicht           : 775
          - Schmelzpunkt               : 244 ° C
          - Löslichkeit
            (Chloroform, 20 ° C)       : 28 g/100 g


**Zu Beispiel 2:**


SIS Blockcopolymer
          - Styrolgehalt               : 15 %
          - Härte Shore A              : 30
          - Brookfield-Viskosität
            (25 %ig in Toluol)         : 1,6 Pa.s


hydriertes Kolophoniumharz
          - Erweichungspunkt (R&B)     : 103 ° C
          - Dichte (25 ° C)            : 1,07 g/ccm
          - Säurezahl                  : 13

5

modifiziertes Naturharz

    - Erweichungspunkt (R&B)   : 75 ° C

    - Dichte (20 ° C)         : 1,045 g/ccm

    - Säurezahl             : 160

naphthenisches/aliphatisches Weißöl

    - Molekulargewicht       : 405

    - Viskosität

      (DIN 51562, 20 ° C)   : 255 $mm^2$/s

    - Dichte (25 ° C)       : 0,877 g/ccm

Polyvinylalkylether

    - Siedepunkt           : ca. 100 ° C

    - Dichte (20 ° C)       : 1,05 g/ccm

    - Glastemperatur (Tg)   : ca. - 49 ° C

phenolisches Antioxidant

    - Molekulargewicht       : 1178

    - Schmelzbereich        : 110 - 125 ° C

    - Löslichkeit

      (Chloroform, 20 ° C)   : 71g/100g

UV-Stabilisator

    - mitteleres Molekular-

      gewicht (Mn)         : ca. 3000

    - Schmelzbereich        : 100 - 135 ° C

    - Dichte (20 ° C)       : 1,01 g/ccm

**Zu Beispiel 3**

S-EB-S Blockcopolymer

- Styrolgehalt : 29 %
- Härte Shore A : 75
- Brookfield-Viskosität
  (20 %ig in Toluol) : 0,6 Pa.s

hydriertes KW-Harz

- Erweichungspunkt (R&B) : 85°C
- Molekulargewicht (Mn) : 520
- Farbe (Saybolt) : 24 - 30

hydriertes Weichharz

- Molekulargewicht : 950
- Dichte (15°C) : 0,888 g/ccm
- Brookfield-Viskosität : 20 Pa.s

Polyacrylsäureester

- Säurezahl : 65
- Viskosität (25°C) : 1600 - 2400 Pa.s
- Glastemperatur (Tg) : - 14°C

phenolisches Antioxidant

- Molekulargewicht : 775
- Schmelzpunkt : 244°C
- Löslichkeit
  (Chloroform, 20 ° C) : 28 g/100 g

Die erfindungsgemäßen Klebmassen sind insbesondere geeignet für Tiefkühlbeutel mit einem reversiblen Verschluß gemäß US-PS 4.709.399, wie sie unter der Bezeichnung "tesa-seal" im Handel sind, oder auch gemäß US-PS 4.633.508 oder DE-OS 3.714.843. Gemäß den dort beschriebenen Verschlüssen können mit den erfindungsgemäßen Heißschmelzklebmassen Verschluß-Systeme hergestellt werden, die hervorragende Tiefkühleigenschaften haben.

## Ansprüche

1. Druckempfindlicher Schmelzhaftkleber enthaltend eine Mischung von thermoplastischen Elastomeren mit polaren, hydrophilen Harzen, ggf. neben weiteren üblichen Bestandteilen, wie Klebharzen, Weichmachern, Alterungsschutzmitteln und/oder Füllstoffen.

2. Schmelzhaftkleber nach Anspruch 1, enthaltend 25 - 60, insbesondere 28 - 40 Gew.-% thermoplastisches Elastomer und 2 - 20, insbesondere 4 - 10 Gew.-% polares, hydrophiles Harz, ggf. neben 0 - 75, insbesondere 10 - 50 Gew.-% Klebharz, 0 - 70, insbesondere 10 - 55 Gew.-% Weichmacher, 0 - 5, insbesondere 0,1 - 1,5 Gew.-% Alterungsschutzmittel und/oder 0 - 30 Gew.-% Füllstoffe.

3. Schmelzhaftkleber nach Anspruch 1, enthaltend als thermoplastisches Elastomer ein Styrolblockcopolymer enthaltend mindestens einen Block bestehend aus einem Copolymer aus 1-Buten und Ethylen oder 1-Propen und Ethylen sowie ggf. weiteren Comonomeren und mindestens einem Block bestehend aus einem Homo- oder Copolymer aus Vinylaromaten, bevorzugt aus Polystyrolhomopolymer.

4. Schmelzhaftkleber nach Anspruch 1, enthaltend als thermoplastisches Elastomer Blockcopolymere mit mindestens einem Block bestehend aus einem Homo- oder Copolymer enthaltend Isopren und/oder 1,3 Butadien sowie ggf. weitere Comonomere, welcher ggf. partiell oder vollständig hydriert sein kann, und mindestens einem Block bestehend aus einem Homo- oder Copolymer aus Vinylaromaten, bevorzugt aus Polystyrolhomopolymer

5. Schmelzhaftkleber nach Anspruch 1, enthaltend als thermoplastisches Elastomer S-EB-S oder S-I-S, ggf. zusammen mit weiteren Styrol-Blockcopolymeren.

6. Schmelzhaftkleber nach Anspruch 1, enthaltend als polares, hydrophiles Harz ein wasserlösliches oder insbesondere wasserquellbares Harz, insbesondere Polyvinylalkylether, Polyvinylpyrrolidon, Polyethyloxazolidin, Polyvinylalkohol oder Polyacrylsäurecopolymer, insbesondere Ester der Polyacrylsäure oder quervernetzte Copolymere der Polyacrylsäure, als Klebharz ein aus Naturharz und/oder Naturharzester und/oder einen stabilisierten Naturharzester und/oder Ester von polymerisierten Naturharzen und/oder insbesondere hydriertes Kohlenwasserstoffharz mit einem Erweichungspunkt von 20° - 150°C. als Weichmacher ein Öl, niedermolekulares Polyisobutylen oder Copolymere enthaltend 1-Buten und Isobutylen als Comonomere oder Wachs, und als Alterungsschutzmittel primäre oder sekundäre Antioxidantien und/oder UV-Stabilisatoren.

7. Schmelzhaftkleber nach Anspruch 1, enthaltend 28 - 38 Gew.-% S-EB-S oder S-I-S Blockcopolymer, 5 - 10 Gew.-% Polyacrylsäureester, Polyvinylalkylether oder Polyethyloxazolin, 10 - 40 Gew.-% hydriertes Kolophoniumharz oder hydriertes KW-Harz, 10 - 55 Gew.-% Weichmacher und 0,1 - 1,5 % Alterungsschutzmittel.

8. Verwendung eines Schmelzhaftklebers nach einem der Ansprüche 1 - 7 für reversibel verschließbare Tiefkühlverpackungen.

9. Verfahren zur Herstellung eines Schmelzhaftklebers nach einem der Ansprüche 1 - 7, dadurch gekennzeichnet, daß man die polaren, hydrophilen Harze in der Schmelze mit den übrigen unpolaren Bestandteilen (thermoplastisches Elastomer und ggf. weitere) mischt.